# EUROPEAN PATENT APPLICATION

(11) **EP 4 446 294 A1**
(43) Date of publication of application: **16.10.2024**
(21) Application number: 22904267.6
(22) Date of filing: 07.12.2022
(51) Int. Cl.: C03C 27/12, B32B 7/025, B32B 17/10, B32B 27/00, G02F 1/13

(54) **COMPOSITE INTERLAYER FILM FOR LAMINATED PANEL, LAMINATED PANEL, AND MANUFACTURING METHOD THEREOF**

(30) Priority: 09.12.2021 JP 2021199994
(71) Applicant: SEKISUI CHEMICAL CO., LTD., Osaka-shi Osaka 530-8565 (JP)
(72) Inventor: IZU, Yasuyuki, Roermond 6041LE (NL); NAKAJIMA, Daisuke, Roermond 6041LE (NL); OOTA, Yuusuke, Koka-shi, Shiga 528-8585 (JP); YANAI, Masashi, Roermond 6041LE (NL)
(74) Representative: Ter Meer Steinmeister & Partner
(86) International application number: PCT/JP2022/045134
(87) International publication number: WO 2023/106339

(57) **Abstract**

A composite interlayer film (10) for a laminated panel is a composite interlayer film for a laminated panel for use in an application in which the composite interlayer film is sandwiched between a pair of transparent panels and integrated therewith to manufacture the laminated panel, and includes a thermoplastic resin sheet (11) and a sheet-shaped object (12) that is embedded in the thermoplastic resin sheet (11) and is electrically controllable.

## Description

### Technical Field

The present invention relates to a composite interlayer film for a laminated panel, the composite interlayer film being used by being sandwiched between two transparent panels, a laminated panel including the composite interlayer film for a laminated panel, and methods for manufacturing the composite interlayer film for a laminated panel and the laminated panel.

### Background Art

In recent years, smartification has been progressing in various fields such as a smart home or smart mobility. Along with the progress of smartification, the market needs for forming a material into a device are increasing. For example, there is a growing demand to provide even glass with smart functionality in which a function is exhibited by electrical control. Because of this, it is being studied to attach, to glass, a board, a film, or the like which has an electric circuit and is electrically controllable.

On the other hand, as glass, laminated glass in which two glass plates are integrated by an interlayer film is widely used. In laminated glass, it has been considered to provide the interlayer film with an electrically controllable film or board.

For example, PTL1 discloses a laminated glass in which an interlayer film is composed of two or more interlayers, and an electrically controllable functional element is provided between the interlayers. PTL1 discloses that a glass panel, an interlayer, a barrier film, a functional element, a barrier film, an interlayer, and a glass panel are overlaid in presented order and then integrated to manufacture the laminated glass disclosed in PTL1.

### Citation List

### Patent Literature

PTL1: JP 2020-510232 A

### Summary of Invention

### Technical Problem

As disclosed in PTL1, when an electrically controllable functional element is provided in an interlayer film, air is likely to accumulate around an end portion of the interlayer film or around the functional element during the manufacture of laminated glass. Because of this, the air may cause foaming to occur, resulting in poor appearance.

Therefore, an object of the present invention is to provide a composite interlayer film for a laminated panel that can prevent the occurrence of poor appearance by suppressing the accumulation of air in the vicinity of an end portion of the interlayer film or around an electrically controllable film or board.

### Solution to Problem

The present invention provides the following [1] to [25].
[1] A composite interlayer film for a laminated panel, for use in an application in which the composite interlayer film is sandwiched between a pair of transparent panels and integrated therewith to manufacture the laminated panel, the composite interlayer film comprising a thermoplastic resin sheet and a sheet-shaped object that is embedded in the thermoplastic resin sheet and is electrically controllable.
[2] The composite interlayer film for a laminated panel according to [1] above, wherein a compression ratio of the thermoplastic resin sheet when held at 90°C and 0.08 MPa for 5 minutes is a 3% or more and 90% or less.
[3] The composite interlayer film for a laminated panel according to [1] or [2] above, wherein a peripheral edge portion of the sheet-shaped object is disposed 8 mm or more inside a peripheral edge portion of the thermoplastic resin sheet.
[4] The composite interlayer film for a laminated panel according to any one of [1] to [3] above, wherein the composite interlayer film has a thickness of 1000 µm or more and 2500 µm or less.
[5] The composite interlayer film for a laminated panel according to any one of [1] to [4] above, wherein the sheet-shaped object comprises a portion having a thickness of 100 µm or more.
[6] The composite interlayer film for a laminated panel according to any one of [1] to [5] above, wherein the composite interlayer film has a surface roughness (Rz) of 1 µm or more and 120 µm or less.
[7] The composite interlayer film for a laminated panel according to any one of [1] to [6] above, wherein the composite interlayer film for a laminated panel has an outline shape conforming to a shape of the transparent panel.
[8] The composite interlayer film for a laminated panel according to any one of [1] to [7] above, wherein a thermoplastic resin constituting the thermoplastic resin sheet is at least one selected from the group consisting of an ethylene vinyl acetate copolymer, a polyolefin-based thermoplastic elastomer, a polyurethane-based thermoplastic elastomer, a polyolefin-based resin, a cyclic olefin-based resin, a polyvinyl acetal-based resin, and an ionomer resin.
[9] The composite interlayer film for a laminated panel according to any one of [1] to [8] above, wherein a thermoplastic resin constituting the thermoplastic resin sheet is at least one selected from the group consisting of a polyvinyl acetal-based resins, an ethylene vinyl acetate copolymer, a polyolefin-based thermoplastic elastomer, and an ionomer resin.
[10] The composite interlayer film for a laminated panel according to any one of [1] to [9] above, wherein the sheet-shaped object comprises at least one device selected from the group consisting of a light control body, a coil, an antenna, a piezoelectric element, an LED element, a battery, a sensor, a switch, and an integrated circuit.
[11] The composite interlayer film for a laminated panel according to any one of [1] to [10] above, wherein the sheet-shaped object is either of a film or a flexible printed board comprising the device.
[12] The composite interlayer film for a laminated panel according to any one of [1] to [11] above, wherein the composite interlayer film for a laminated panel does not contain a light control film.
[13] The composite interlayer film for a laminated panel according to any one of [1] to [12] above, wherein the composite interlayer film for a laminated panel is other than a composite interlayer film in which two or more light control films are disposed in a thickness direction.
[14] The composite interlayer film for a laminated panel according to any one of [1] to [13] above, wherein a maximum thickness of the sheet-shaped object is 1500 µm or less.
[15] The composite interlayer film for a laminated panel according to any one of [1] to [14] above, wherein the sheet-shaped object occupies 0.2% or more and 99% or less of the thermoplastic resin sheet in a thickness direction.
[16] The composite interlayer film for a laminated panel according to any one of [1] to [15] above, wherein the sheet-shaped object occupies 30% or more and 99% or less of an area of the thermoplastic resin sheet.
[17] A method for manufacturing the composite interlayer film for a laminated panel according to any one of [1] to [16] above, the method comprising disposing the sheet-shaped object between sheets for forming the thermoplastic resin sheet, and embedding the sheet-shaped object inside the thermoplastic resin sheet.
[18] The method for manufacturing the composite interlayer film for a laminated panel according to [17] above, wherein the sheets for forming the thermoplastic resin sheet are processed into an outline shape conforming to a shape of the transparent panel.
[19] The method for manufacturing the composite interlayer film for a laminated panel according to [17] or [18] above, wherein after the sheet-shaped object is disposed between the sheets for forming the thermoplastic resin sheet, thermocompression bonding is carried out.
[20] The method for manufacturing the composite interlayer film for a laminated panel according to [19] above, wherein the thermocompression bonding is carried out by pressurization or a negative pressure.
[21] The method for manufacturing the composite interlayer film for a laminated panel according to [19] or [20] above, wherein a surface roughness (Rz) of the composite interlayer film is adjusted to 1 µm or more and 120 µm or less during the thermocompression bonding.
[22] The method for manufacturing the composite interlayer film for a laminated panel according to [21] above, wherein before the thermocompression bonding, an irregularity is imparted to a surface of the sheet for forming the thermoplastic resin sheet, or during the thermocompression bonding, a release sheet having an irregularity imparted thereto is overlaid on the sheet for forming the thermoplastic resin sheet in such a way as to be in contact therewith.
[23] A laminated panel comprising the composite interlayer film according to any one of [1] to [16] above and a pair of transparent panels, wherein
   the composite interlayer film is disposed between the pair of transparent panels, and the pair of transparent panels are integrated via the composite interlayer film.
[24] A method for manufacturing a laminated panel, comprising disposing the composite interlayer film according to any one of [1] to [16] above between a pair of transparent panels, and integrating the pair of transparent panels via the composite interlayer film.
[25] A method for using a composite interlayer film for a laminated panel in an application to manufacture of a laminated panel, the method comprising sandwiching the composite interlayer film for a laminated panel according to any one of [1] to [16] above between a pair of transparent panels and integrating the composite interlayer film with the pair of transparent panels to manufacture a laminated panel.

### Advantageous Effects of Invention

According to the composite interlayer film for a laminated panel according to the present invention, it is possible to prevent the occurrence of poor appearance by suppressing the accumulation of air in the vicinity of an end portion of the interlayer film or around the electrically controllable sheet-shaped object.

### Brief Description of Drawings

[Fig. 1] Fig. 1 is a schematic cross-sectional view showing a composite interlayer film for a laminated panel according to one embodiment of the present invention.
[Fig. 2] Fig. 2 is a schematic cross-sectional view showing a composite interlayer film for a laminated panel according to one embodiment of the present invention.
[Fig. 3] Fig. 3 is a schematic cross-sectional view showing a composite interlayer film for a laminated panel according to one embodiment of the present invention.
[Fig. 4] Fig. 4 is a schematic cross-sectional view showing a composite interlayer film for a laminated panel according to one embodiment of the present invention.
[Fig. 5] Fig. 5 is a schematic cross-sectional view showing a method for manufacturing a laminated panel by using a composite interlayer film for a laminated panel according to one embodiment of the present invention.

### Description of Embodiments

### <Composite interlayer film>

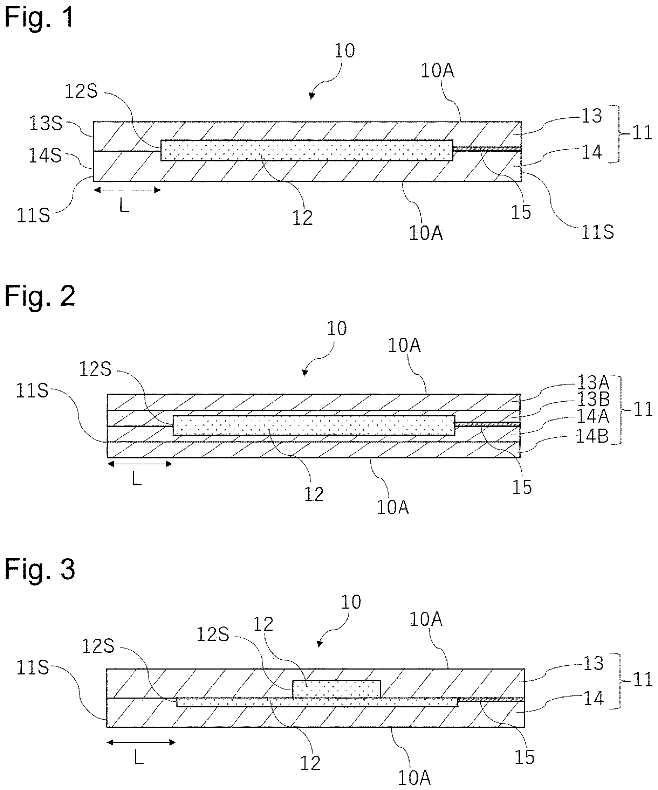

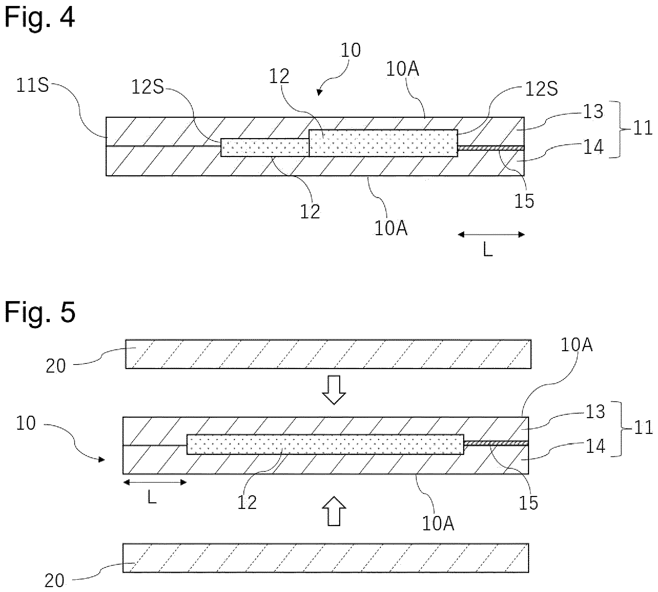

As shown in Fig. 1, the composite interlayer film for a laminated panel according to the present invention (hereinafter also referred to as the "composite interlayer film") is a composite interlayer film 10 including a thermoplastic resin sheet 11 and a sheet-shaped object 12 that is embedded in the thermoplastic resin sheet 11 and is electrically controllable. As will be described later, the composite interlayer film 10 is used in an application in which the composite interlayer film 10 is sandwiched between a pair of transparent panels 20, 20 and integrated therewith to manufacture a laminated panel (see Fig. 5).

In the present invention, by manufacturing a laminated panel by using the composite interlayer film 10 in which the sheet-shaped object 12 is embedded in the thermoplastic resin sheet 11, air can be prevented from accumulating at an end portion of the composite interlayer film 10 and around the sheet-shaped object 12 during the manufacture of the laminated panel. Because of this, generation of an air bubble in the laminated panel is prevented, making it possible to provide a laminated panel having good appearance.

Furthermore, when the sheet-shaped object 12 is provided in an interlayer film, each member may be misaligned or the thermoplastic resin of the thermoplastic resin sheet 11 may be extruded outside by the sheet-shaped object 12, during the production of the laminated panel, and thus the thermoplastic resin is likely to protrude. However, in the present invention, by manufacturing a laminated panel by using the composite interlayer film 10 obtained in advance, each member is prevented from being misaligned or the thermoplastic resin is prevented from being extruded outside, during the manufacture of the laminated panel, and thus the thermoplastic resin can be prevented from protruding outside the laminated panel. Because of this, improvement is obtained in the workability in a trim treatment involving removing the unnecessary thermoplastic resin protruding outside after manufacturing the laminated panel.

### [Thermoplastic resin sheet]

The composite interlayer film 10 includes the thermoplastic resin sheet 11 as described above. The thermoplastic resin sheet may consist of one sheet, and is preferably formed by integrating a plurality of sheets. When a plurality of sheets is used, the plurality of sheets may preferably be laminated in the thickness direction and integrated. When the thermoplastic resin sheet is formed by integrating a plurality of sheets, a sheet-shaped object is preferably disposed between the sheets. When the thermoplastic resin sheet is formed of two or more sheets, the sheet-shaped object can be easily embedded inside the thermoplastic resin sheet.

When the thermoplastic resin sheet is formed of a plurality of sheets, the number of the sheets is not particularly limited as long as the number is 2 or more, and in view of practicality, the number is preferably 10 or less, more preferably 8 or less, further preferably 6 or less, and more further preferably 4 or less.
Fig. 1 shows an embodiment in which the thermoplastic resin sheet 11 consists of two sheets 13, 14, and the sheet-shaped object 12 is disposed between the sheet 13 and the sheet 14; however, the thermoplastic resin sheet is of course not limited thereto. The same also applies to the following description.

When the thermoplastic resin sheet is formed of three or more sheets, the sheet-shaped object may be disposed between one sheet and a plurality of sheets consisting of two or more sheets overlaid, and in view of making it easy to embed the sheet-shaped object in the thermoplastic resin sheet, it is also preferable to dispose the sheet-shaped object between a plurality of sheets consisting of two or more sheets overlaid and a plurality of sheets consisting of two or more sheets overlaid. For example, when four sheets are provided, the sheet-shaped object may be disposed between one sheet and three sheets, and as shown in Fig. 2, it is preferable to dispose the sheet-shaped object between two sheets 13A, 13B and two sheets 14A, 14B.

When the thermoplastic resin sheet 11 is formed of a plurality of sheets, the sheets adjacent in the thickness direction are preferably adhered to each other and integrated. Similarly, the sheets (sheets 13, 14 in Fig. 1) disposed in such a way as to sandwich the sheet-shaped object 12 may also be adhered to each other and integrated in portions where the sheet-shaped object 12 is not provided, to cover end faces (that is, side surfaces) of the sheet-shaped member 12 with the integration portions. In such an embodiment, the sheet-shaped member 12 is appropriately embedded between the sheets (the sheets 13, 14 in Fig. 1).

The sheets 13, 14 are shown in a distinguished manner in Fig. 1, but in some cases, these cannot be distinguished in the thermoplastic resin sheet 11 when these are integrated in the composite interlayer film. The same also applies to Figs. 2 to 4.

The thermoplastic resin used for the thermoplastic resin sheet (each sheet when the thermoplastic resin sheet is formed of a plurality of sheets) is not particularly limited, and examples thereof include an ethylene vinyl acetate copolymer (EVA), a polyolefin-based thermoplastic elastomer (POE), a polyurethane-based thermoplastic elastomer (TPU), a polyolefin-based resin (PO) such as a polyethylene-based resin or a polypropylene-based resin, a cyclic olefin-based resin (COP) such as a cyclic olefin-based copolymer (COC), a polyvinyl acetal-based resin (PVAc) such as a polyvinyl butyral-based resin (PVB), and an ionomer resin.

Among these, an ethylene vinyl acetate copolymer (EVA), a polyolefin-based thermoplastic elastomer (POE), a polyvinyl acetal-based resin (PVAc), and an ionomer resin are preferable. Among others, a polyvinyl acetal-based resin is more preferable, and a polyvinyl butyral-based resin is further preferable. The use of these resins is likely to improve the adhesiveness to the sheet-shaped object, and the use of a polyvinyl acetal-based resin is likely to improve penetration resistance and others as well.

The thermoplastic resins described above may be used singly or in combinations of two or more, and the thermoplastic resin sheet may be formed from a mixture of two or more thermoplastic resins.

When the thermoplastic resin sheet is formed of a plurality of sheets, the thermoplastic resin used for each sheet may be a single thermoplastic resin or a combination of two or more thermoplastic resins, and each sheet may be formed from a mixture of two or more thermoplastic resins.

When the thermoplastic resin sheet is formed of a plurality of sheets, the thermoplastic resins used for the sheets may be the same resin or different resins, and in view of easy integration of a plurality of sheets, it is preferable to use the same resin.

Therefore, when the thermoplastic resin sheet is formed of a plurality of sheets, the thermoplastic resin used for each sheet is preferably an ethylene vinyl acetate copolymer, a polyolefin-based thermoplastic elastomer, or a polyvinyl acetal-based resin, and more preferably a polyvinyl acetal-based resin.

The polyvinyl acetal-based resin is obtained by acetalizing polyvinyl alcohol with an aldehyde such as n-butyraldehyde. As polyvinyl alcohol, polyvinyl alcohol having a degree of saponification of 80 to 99.8 mol% is generally used.

Therefore, the polyvinyl acetal-based resin usually has an acetal group, a hydroxyl group, and an acetyl group in a side chain. The polyvinyl acetal-based resin may be an unmodified polyvinyl acetal-based resin having no functional group other than the above groups in a side chain, or a modified polyvinyl acetal-based resin having a modifying group other than the above groups in a side chain.

Examples of the modifying group include a carboxamide group (-CONHR), an acyl group (-COR) other than an acetyl group, and a polyoxyalkylene group. R in each of the carboxamide group and the acyl group is a hydrocarbon group having 2 to 30 carbon atoms, preferably an alkyl group having 3 to 24 carbon atoms, and more preferably an alkyl group having 5 to 20 carbon atoms.

Examples of the polyoxyalkylene group include a polyoxyethylene group, a polyoxypropylene group, a polyoxybutylene group, and a group consisting of a copolymer of two or more selected from oxyethylene, oxypropylene, and oxybutylene.

The ionomer resin is not particularly limited, and various ionomer resins can be used. Specific examples thereof include an ethylene-based ionomer, a styrene-based ionomer, a perfluorocarbon-based ionomer, a telechelic ionomer, and a polyurethane ionomer. Among these, an ethylene-based ionomer is preferable in view of improving the mechanical strength, the durability, the transparency, and others of laminated glass and in view of excellent adhesiveness to glass. Examples of the ethylene-based ionomer include an ethylene-(meth)acrylate ionic copolymer.

In the thermoplastic resin sheet (each sheet when formed by a plurality of sheets), the thermoplastic resin is preferably the main component, and the content thereof may be 50% by mass or more, preferably 70% by mass or more, and further preferably 80% by mass or more, based on the total amount of the thermoplastic resin sheet (each sheet when formed by a plurality of sheets).

The thermoplastic resin sheet (each sheet when formed by a plurality of sheets) may contain a plasticizer. When the thermoplastic resin sheet contains a plasticizer, the thermoplastic resin sheet is flexible. As a result, the flexibility of the laminated panel is improved, and the penetration resistance and others are also easily improved. In addition, the adhesiveness to a sheet-shaped object and a transparent panel is also easily improved. Examples of the plasticizer include an organic ester plasticizer such as a monobasic organic acid ester and a polybasic organic acid ester.

In view of flexibility, penetration resistance, adhesiveness, and others, the content of the plasticizer in the thermoplastic resin sheet (each sheet when formed by a plurality of sheets) is, for example, 10 parts by mass or more and 100 parts by mass or less, preferably 20 parts by mass or more and 80 parts by mass or less, and more preferably 25 parts by mass or more and 65 parts by mass or less, per 100 parts by mass of the thermoplastic resin.

The thermoplastic resin sheet (each sheet when formed by a plurality of sheets) may be substantially free of a plasticizer. When the thermoplastic resin sheet is substantially free of a plasticizer, it is possible to prevent the sheet-shaped object from being eroded by the plasticizer. The term "substantially free" means that the content of the plasticizer in the thermoplastic resin sheet (each sheet when formed by a plurality of sheets) is less than 10 parts by mass, and the content is preferably 5 parts by mass or less, more preferably 3 parts by mass or less, and further preferably 0 parts by mass.

The thermoplastic resin sheet may contain an additive other than a plasticizer, such as a coloring agent such as a dye or a pigment, a filler, an infrared absorber, an ultraviolet absorber, an antioxidant, a light stabilizer, a fluorescent brightener, a crystal nucleating agent, a dispersant, a metal carboxylate, or a heat shielding material, as necessary.

The compression ratio of the thermoplastic resin sheet when held at 90°C and a pressure of 0.08 MPa for 5 minutes is preferably 3% or more and 90% or less. When the compression ratio is within the above range, the thermoplastic resin sheet flows moderately during thermocompression bonding, and the sheet-shaped object can be easily embedded in the thermoplastic resin sheet without leaving air in the thermoplastic resin sheet. In addition, when the thermoplastic resin sheet flows moderately during thermocompression bonding, it is possible to make the thickness of the resulting composite interlayer film uniform. Furthermore, it is also possible to prevent the thermoplastic resin constituting the thermoplastic resin sheet from protruding outside the laminated panel when manufacturing the laminated panel. The compression ratio is further preferably 4% or more and 80% or less. The compression ratio is calculated from the thickness change rate when the temperature is raised to 90°C at 6°C/min at a pressure of 0.08 MPa in compression mode of the dynamic viscoelasticity apparatus RSA-G2 and then the thermoplastic resin sheet is held thereat for 5 minutes, and calculated as (thickness at the start of holding time - thickness after holding time of 5 minutes)/(thickness at the start of holding time) × 100.

The compression ratio can be adjusted by the type and the amount of the resin constituting the thermoplastic resin sheet, the type and the amount of the plasticizer, and others.

When the thermoplastic resin sheet is formed of a plurality of sheets, the thickness of each sheet is preferably 100 µm or more, more preferably 200 µm or more, further preferably 300 µm or more, and preferably 1000 µm or less, more preferably 800 µm or less, further preferably 500 µm or less. When the thickness of each sheet is equal to or greater than these lower limit values, the sheet-shaped object can be easily embedded inside the thermoplastic resin sheet. When the thickness of each sheet is equal to or less than these upper limit values, it is possible to prevent the thickness of the composite interlayer film from becoming larger than necessary.

### <Sheet-shaped object>

The sheet-shaped object used in the present invention is electrically controllable. The sheet-shaped object generally has an electric circuit, and the operation thereof is switched by the flow of a current or the change in the amount of a current that flows. Specific examples of the sheet-shaped object include an electrically controllable film or an electrically controllable board such as a flexible printed board.

More specific examples thereof include a film or a flexible printed board including a device such as a light control body, a coil, an antenna, a piezoelectric element, an LED element, a battery, a sensor such as a touch sensor, a switch, or an integrated circuit such as a memory, a processor, or a communication IC. These devices are preferably provided on each sheet-shaped object singly or in combinations of two or more.

For example, the antenna can be supplied with electric power in a non-contact manner from the outside, and in this case, the antenna may be of an electromagnetic induction type or a magnetic resonance type. The antenna is generally composed of a coil. The antenna may be formed from a metal material such as a metal paste, for example by printing.

The flexible printed board is generally a board on which wiring is printed and in which a device is mounted on a material substrate. A resin board is used as the board. The resin board is not particularly limited, and a polyester resin board of polyethylene terephthalate, polyethylene naphthalate, or the like, or a polyimide resin board are used, for example. The resin board in the flexible printed board has flexibility, and cannot be clearly distinguished from the resin film in some cases. The wiring may be formed from a metal material such as a metal paste, or may be formed from a metal oxide, a metal, or a conductive material other than a metal oxide.

For example, the electrically controllable film may be one including at least a base material film and a device provided on the base material film, or may be one in which a device is disposed between two base material films. Examples of the base material film include various resin films such as a polyester resin film of polyethylene terephthalate, polyethylene naphthalate, or the like, an acrylic resin film, a cellulose derivative film of triacetylcellulose (TAC) or the like, a polyether sulfone (PES) resin film, or a polyimide resin film.

In the electrically controllable film, an electrode layer is preferably provided on the device-side surface of the base material film. For the electrode layer, a conventionally known electrode material can be used without particular limitation, and the electrode layer is preferably a transparent electrode layer. Specific examples of the electrode material include an indium tin oxide (ITO) conductive film, a tin oxide conductive film, a zinc oxide conductive film, and a polymeric conductive film.

Examples of the electrically controllable film include a light control film in which the device is a light control body. The light control film includes two base material films and a light control body (light control layer) disposed between the two base material films. Examples of the light control film include a polymer dispersed liquid crystal (PDLC) film, an electrochromic film, an SPD (Suspended Particle Device) film, and an electrophoretic film device.

The polymer dispersed liquid crystal (PDLC) film has a light control layer composed of a polymer dispersed liquid crystal. Examples of the polymer dispersed liquid crystal include one referred to as a network type liquid crystal in which a network structure is formed from a polymer in a liquid crystal layer (light control layer).

The SPD film has a light control layer composed of a layer including a resin matrix and a light control suspension dispersed in the resin matrix. In the case of the electrochromic film, the light control layer may include an electrochromic material. The electrochromic material is not limited as long as the electrochromic material is a compound having electrochromicity, and may be any of an inorganic compound, an organic compound, and a mixed valence complex.

The electrophoretic film device has, for example, an electrophoretic portion between two base materials having an electrode layer. The electrophoretic portion includes, for example, an electrophoretic particle and a dispersant that disperses the electrophoretic particle.

Preferable specific examples of the sheet-shaped object include a flexible printed board and a light control film including at least one of the various devices described above. The flexible printed board may be one referred to as an FHE (flexible hybrid electronic), which is a combination of an electronic component, such as a sensor, a battery, or an antenna, and an integrated circuit, such as a memory, a processor, or a communication IC. The flexible printed board may be, for example, a flexible printed board equipped with NFC (Near Field Communication) including an antenna and an integrated circuit.

In one embodiment, the composite interlayer film is preferably other than a mode in which two or more light control films are disposed in the thickness direction. In one embodiment, the composite interlayer film may be a mode that does not contain a light control film.

In the composite interlayer film 10, one sheet-shaped object 12 may be provided as shown in Figs. 1 and 2, or two or more sheet-shaped objects 12 may be provided as shown in Figs 3 and 4. When a plurality of sheet-shaped objects 12 are provided, the number thereof is not particularly limited, and in view of workability and the viewpoint of appropriately embedding the sheet-shaped objects 12 in the thermoplastic resin sheet 11, the number is, for example, 10 or less, preferably 5 or less, and further preferably 3 or less.

When two or more sheet-shaped objects 12 are provided, the plurality of sheet-shaped objects 12 may be provided along the thickness direction as shown in Fig. 3. When a plurality of sheet-shaped objects 12 are provided along the thickness direction, the number of sheet-shaped objects disposed in the thickness direction is not particularly limited, and in view of preventing the thickness of the composite interlayer film 10 from becoming too large, the number is 3 or less.

Two or more sheet-shaped objects 12 may be provided along the plane direction as shown in Fig. 4. As shown in Fig. 4, the plurality of sheet-shaped objects 12 provided along the plane direction often have different thicknesses, and because of the difference in thickness, air is likely to accumulate, for example between two of the sheet-shaped objects 12. However, in the present invention, each sheet-shaped object 12 is embedded inside the thermoplastic resin sheet 11 before integrated with the transparent panels as described above, whereby air is unlikely to accumulate, for example between two of the sheet-shaped objects 12, 12.

When the thermoplastic resin sheet 11 is formed of a plurality of sheets, two or more sheet-shaped objects 12 are preferably both disposed at positions between the sheets 13, 14 as shown in Figs. 3 and 4. When two or more sheet-shaped objects 12 are both disposed at positions between the sheets 13, 14, it is easy to manufacture the composite interlayer. Figs. 3 and 4 each show an example in which two sheets form the thermoplastic resin sheet 11, but the number of sheets is not limited and is as described above.

The sheet-shaped object 12 is smaller than the thermoplastic resin sheet 11, and when the composite interlayer film 10 is viewed in the thickness direction, the outline of the sheet-shaped object 12 (peripheral edge portion 12S) is disposed inside the outline of the thermoplastic resin sheet 11 (peripheral edge portion 11S). Thus, the sheet-shaped object 12 is covered with the thermoplastic resin sheet 11 not only over both surfaces but also over the end faces thereof and is embedded in the thermoplastic resin sheet 11.

When the thermoplastic resin sheet 11 is formed of a plurality of sheets as described above, the sheet-shaped object 12 is preferably disposed between the sheets forming the thermoplastic resin sheet 11 (between the sheets 13 and 14 in Fig. 1). As shown in Fig. 1, the sheet-shaped object 12 is preferably smaller than each of the sheets 13, 14 between which the sheet-shaped object 12 is disposed, and when the composite interlayer film 10 is viewed in the thickness direction, the outline of the sheet-shaped object 12 (that is, peripheral edge portion 12S) is preferably e disposed inside the outline of each of the sheets 13, 14 (that is, peripheral edge portions 13S, 14S) between which the sheet-shaped object 12 is disposed. The peripheral edge portion 12S of the sheet-shaped object 12 is more preferably disposed inside the peripheral edge portions of all the sheets forming the thermoplastic resin sheet 11.

Therefore, the peripheral edge portion 12S of the sheet-shaped object 12 is preferably disposed inside the peripheral edge portion 11S of the thermoplastic resin sheet 11 (that is, the peripheral edge portions 13S and 14S of the sheets 13, 14 between which the sheet-shaped object 12 is disposed) over the entire perimeter. The peripheral edge portion 12S of the sheet-shaped object 12 is preferably disposed on the inner peripheral side of the peripheral edge portion 1 1S (that is, the peripheral edge portions 13S, 14S) at a distance L of 8 mm or more therefrom, and more preferably disposed on the inner peripheral side thereof at a distance L of 10 mm or more therefrom.

When the peripheral edge portion 12S is disposed on the inner peripheral side at a distance L of 8 mm or more, it is possible to appropriately embed the sheet-shaped object 10 in the thermoplastic resin sheet 11. In addition, it is also possible to easily prevent the thermoplastic resin constituting the thermoplastic resin sheet 11 from protruding outside the laminated panels.

Here, as described above, the distance L between the peripheral edge portion 12S and the peripheral edge portion 1 1S (that is, the peripheral edge portions 13S, 14S) is preferably 8 mm or more, and more preferably 10 mm or more. The upper limit of the distance L is not particularly limited, and the distance L is preferably, for example, 1000 mm or less, or 500 mm or less. The distance L means the shortest distance between the peripheral edge portion 12S and the peripheral edge portion 11S. Therefore, the peripheral edge portion 12S of the sheet-shaped object 12 is preferably disposed inside the peripheral edge portion 11S at a distance of 8 mm or more therefrom, and more preferably disposed inside the same at a distance of 10 mm or more therefrom, over the entire perimeter.

As shown in Figs. 3 and 4, when two or more sheet-shaped objects 12 are provided in the composite interlayer film, the peripheral edge portion 12S of each sheet-shaped object 12 is preferably disposed inside the peripheral edge portion 11S of the thermoplastic resin sheet (that is, the peripheral edge portions 13S, 14S), and the distance L between each sheet-shaped object 12 and the peripheral edge portion 11S may be as described above.

An electrode wire 15 may be connected to the sheet-shaped object 12. The electrode wire 15 is an extraction electrode that electrically connects the outside of the composite interlayer film and the sheet-shaped object 12. A cable such as a flexible flat cable may be used as the electrode wire 15. One electrode wire 15 or a plurality of electrode wires 15 may be connected to the sheet-shaped object 12.

Electric power may be supplied to the device of the sheet-shaped object 12 from the outside via the electrode wire 15. Therefore, the electrode wire 15 may be extended from the sheet-shaped object 12 to the peripheral edge portion 11S of the thermoplastic resin sheet 11. For example, when the thermoplastic resin sheet 11 is formed of two or more sheets, the electrode wire 15 is preferably disposed between the sheet 13 and the sheet 14 between which the sheet-shaped object 12 is disposed, as shown in Fig. 1.

The extraction electrode (electrode wire 15) may be omitted, and in this case, electric power may be supplied to the sheet-shaped object 12 by means other than the extraction electrode. For example, when the sheet-shaped object 12 is provided with an antenna, electric power may be supplied via the antenna.

In the composite interlayer film 10, a joining portion (not shown) may be present in the peripheral edge portion 11S of the thermoplastic resin sheet 11, or a joining portion (not shown) may be present inside the thermoplastic resin sheet 11. Examples of the joining portion include a connector such as an FPC connector, a ZIF connector, a floating connector, a mating connector, or a flip lock connector, and a conductive portion via an anisotropic conductive film. The connector is preferably attached to the thermoplastic resin sheet 11 by a known method such as soldering, mating, or plugging. The connector is preferably connected to the electrode wire 15 extended to a predetermined point on the thermoplastic resin sheet 11.

The joining portion provided inside the thermoplastic resin sheet 11 may connect the electrode wires 15 such as a flexible flat cable. The joining portion provided inside the thermoplastic resin sheet 11 is preferably a conductive portion via an anisotropic conductive film or the like.

As described above, the sheet-shaped object 12 is provided with a device or the like, and in general the thickness thereof often varies depending on the position. In the present invention, the sheet-shaped object 12 is embedded inside the thermoplastic resin sheet 11 before integrated with the transparent panels, and thus even if the thickness of the sheet-shaped object 12 changes depending on the position, air can be prevented from accumulating at a position at which the thickness changes.

As described above, the thickness of the sheet-shaped object 12 can vary depending on the position, and the sheet-shaped object 12 includes preferably a portion having a thickness of at least 100 µm or more, more preferably a portion having a thickness of 200 µm or more, and further preferably a portion having a thickness of 300 µm or more. When the sheet-shaped object includes a portion having a thickness of 100 µm or more, a device or the like can be appropriately mounted on the sheet-shaped object 12. When the sheet-shaped object 12 is a flexible printed board, the sheet-shaped object 12 is likely to be relatively thick, and may include a portion having a thickness of 500 µm or more. When the thickness of the sheet-shaped object 12 increases, the thermoplastic resin constituting the thermoplastic resin sheet 11 is likely to be extruded to the outside to cause the protrusion of the thermoplastic resin; however, such protrusion of the thermoplastic resin can be prevented in the present invention, by embedding the sheet-shaped object 12 in the thermoplastic resin sheet 11 in advance as described above.

The thickness of the thickest portion (maximum thickness) of the sheet-shaped object 12 is preferably 1500 µm or less, more preferably 1000 µm or less, and further preferably 800 µm or less. When the maximum thickness is 1500 µm or less, air is unlikely to accumulate. In addition, variation in the thickness is unlikely to occur in the resulting composite interlayer film.

When the sheet-shaped object is an electrically controllable film, the sheet-shaped object is likely to be relatively thin, and for example, the maximum thickness thereof may be less than 500 µm.

The thickness of the sheet-shaped object 12 refers to the thickness of each sheet-shaped object 12 when a plurality of sheet-shaped objects 12 are provided. When a plurality of sheet-shaped objects 12 are provided, at least one sheet-shaped object 12 may have the thickness described above, and preferably all the sheet-shaped objects 12 each have the thickness described above.

The size of the sheet-shaped object 12 is not particularly limited, and when viewed from the thickness direction, the sheet-shaped object 12 may occupy, for example, 0.2% or more and 99% or less of the thermoplastic resin sheet 11. When the sheet-shaped object 12 occupies 0.2% or more, various functions can be imparted to the sheet-shaped object. When the sheet-shaped object 12 occupies 99% or less, the sheet-shaped object 12 can be easily embedded in the thermoplastic resin sheet 11. From these viewpoints, the occupied area may be preferably 1% or more and 99% or less, more preferably 3% or more and 95% or less, and further preferably 5% or more and 90% or less.

The sheet-shaped object 12 may have a size that occupies a large portion of the thermoplastic resin sheet 11, and the thermoplastic resin sheet 11 may occupy, for example, 30% or more and 99% or less of the area, may occupy 40% or more and 95% or less of the area, or may occupy 50% or more and 90% or less of the area. When an electrically controllable film such as a light control film is used, the sheet-shaped object 12 is relatively large as described above. The electrically controllable film has a large occupied area but is relatively thin, and thus it can be appropriately embedded in the thermoplastic resin sheet 11.

The sheet-shaped object 12 may have a size that does not occupy a large portion of the thermoplastic resin sheet 11, and it may occupy, for example, 0.2% or more and less than 50% of the area of the thermoplastic resin sheet 11, may occupy 1% or more and 35% or less of the area, or may occupy 5% or more and 25% or less of the area. The occupied area of the sheet-shaped object 12 is relatively small as described above when, for example, a flexible printed board is used. Many flexible printed boards are relatively thick, but occupy a small occupied area, and thus it can be appropriately embedded in the thermoplastic resin sheet 11.

The size (occupied area) of the sheet-shaped object here means the size of each sheet-shaped object when a plurality of sheet-shaped objects are provided.

A surface 10A of the composite interlayer film 10 may have an irregularity. The surface 10A of the composite interlayer film 10 usually serves as a joining surface to a transparent panel, and when the surface 10A has an irregularity, air is unlikely to accumulate between the composite interlayer film 10 and the transparent panel when joined to the transparent panel. Thus, the composite interlayer film 10 can be joined to the transparent panel without forming an air bubble between the composite interlayer film 10 and the transparent panel. In addition, the blocking resistance is also improved, and self-adhesion can be prevented even when a plurality of the composite interlayer films 10 are stacked and stored.

The surface roughness (Rz) of the surface 10A of the composite interlayer film 10 is, for example, 1 µm or more and 120 µm or less. When the surface roughness (Rz) is within the above range, it is possible to join the composite interlayer film to the transparent panel with good workability while forming almost no air bubble between the transparent panel and the composite interlayer film. Furthermore, the blocking resistance is also improved. From these viewpoints, the surface roughness (Rz) is preferably 3 µm or more and 100 µm or less, more preferably 5 µm or more and 80 µm or less, and further preferably 10 µm or more and 70 µm or less.

For the surface roughness (Rz) of the composite interlayer film 10, only one surface 10A may have the above surface roughness (Rz), and preferably both surfaces 10A, 10A each have the above surface roughness (Rz). As shown in Figs. 1 to 4, the surfaces of the thermoplastic resin sheet 11 are usually the surfaces 10A of the composite interlayer film 10.

The surface roughness (Rz) is the ten-point average roughness measured according to JIS B0601:1994.

The composite interlayer film 10 preferably has an outline shape conforming to the shape of the transparent panel integrated with the composite interlayer film 10. Therefore, for example, when the outline of the transparent panel is square, the outline of the composite interlayer film 10 may also be square. When the transparent panel forms a partially curved line, for example to match the side glass, the windshield, or the like of an automobile, the outline of the composite interlayer film 10 may also form a partially curved line according to the curved line.

The thickness of the composite interlayer film 10 is preferably 1000 µm or more. When the thickness of the composite interlayer film 10 is 1000 µm or more, the sheet-shaped object 12 can be appropriately embedded in the thermoplastic resin sheet 11. When the thickness is 1000 µm or more, air is generally likely to accumulate at an end portion of the composite interlayer film and around the sheet-shaped object, but air can be prevented from accumulating in the present invention, by using the composite interlayer film 10 that has been integrated in advance as described above. From these points of view, the thickness of the composite interlayer film 10 is more preferably 1200 µm or more, and further preferably 1500 µm or more.

The thickness of the composite interlayer film 10 is, for example, 3000 µm or less, preferably 2500 µm or less, and more preferably 2100 µm or less. When the thickness of the composite interlayer film 10 is equal to or less than the above upper limit value, it is possible to prevent the laminated panel from becoming larger than necessary.

### <Method for manufacturing composite interlayer film>

The composite interlayer film of the present invention is obtained by integrating a laminated body obtained by laminating a plurality of sheets for forming a thermoplastic resin sheet while disposing a sheet-shaped object between the sheets. Thus, the sheet-shaped object can be embedded inside the thermoplastic resin sheet formed of a plurality of sheets.

The laminated body is preferably integrated by thermocompression bonding. By integration by thermocompression bonding, the sheet-shaped object can be appropriately embedded in the thermoplastic resin sheet. Here, the heating temperature for thermocompression bonding is, for example, 30°C or more and 130°C or less, and preferably 40°C or more and 100°C or less. The pressure (gauge pressure) for thermocompression bonding is, for example, 0.01 MPa or more and 17 MPa or less, and preferably 1 MPa or more and 8 MPa or less. The compression bonding may be carried out by using a negative pressure, and for example, the gauge pressure may be about -780 mbar.

By thermocompression bonding at the above temperature and pressure, the sheet-shaped object can be embedded inside the thermoplastic resin sheet without leaving air around the sheet-shaped object, or at an end portion of the thermoplastic resin sheet, for example. In addition, the thickness of the resulting composite interlayer film can be made uniform. The thermocompression bonding may be carried out by, for example, press forming, roll forming, a vacuum laminator, or the like.

In order to prevent the thermoplastic resin sheet from sticking to the forming machine (for example, a press plate) during thermocompression bonding, a release sheet may be disposed on one or both sides of the laminated body. The release sheet is not particularly limited, and may be a resin sheet, or a film obtained by subjecting at least one surface of a resin sheet to a release treatment with a silicone release agent or the like. The resin sheet may be a rubber sheet formed from EPDM or the like.

When the thermoplastic resin sheet is formed of two sheets, the sheet-shaped object is preferably disposed between one sheet and the other sheet. When the thermoplastic resin sheet is formed of three or more sheets, the sheet-shaped object may be disposed between a plurality of sheets consisting of two or more sheets overlaid and one sheet, or disposed between a plurality of sheets consisting of two or more sheets overlaid and a plurality of sheets consisting of two or more sheets overlaid.

When the composite interlayer film has an electrode wire connected to the sheet-shaped object, the electrode wire may be disposed between the sheets while connected to the sheet-shaped object.

Each sheet for forming the thermoplastic resin sheet preferably has an outline shape conforming to the shape of the transparent panel with which the composite interlayer film is integrated.

Each sheet for forming the thermoplastic resin sheet is preferably processed, by cutting, into an outline shape conforming to the shape of the transparent panel. Therefore, when the outline shape of the transparent panel is a square, each sheet for forming the thermoplastic resin sheet is preferably cut into a square in advance and then laminated. For example, when the outline of the transparent panel forms a partially curved line, the outline of each sheet for forming the thermoplastic resin sheet may also be processed into a partially curved line.

As described above, when the composite interlayer film is provided with an electrode wire, the electrode wire is extended to the peripheral edge portion of the thermoplastic resin sheet, and in some cases, a connector is further attached. Because of this, when an attempt is made to cut the composite interlayer film into a desired outline shape after manufactured, it is also necessary to cut the electrode wire together, but it is difficult to cut the electrode wire efficiently together with the thermoplastic resin sheet. In addition, once a connector is attached, the cutting is even more difficult. On the other hand, as described above, when each sheet is cut into a desired outline shape before integrated with the sheet-shaped object and the electrode wire, it is unnecessary to cut a composite interlayer film having an electrode wire or having a connector attached thereto, and thus it is possible to easily obtain a composite interlayer film having the desired outline shape.

In the present manufacturing method, the surface of the resulting composite interlayer film is preferably conditioned to have a desired irregularity, during the thermocompression bonding described above. Specifically, the surface of the composite interlayer film is preferably conditioned such that one or both surfaces of the resulting composite interlayer film after thermocompression bonding have the surface roughness (Rz) described above.

As one method for conditioning to impart the desired irregularity as described above, for example, an irregularity is preferably imparted to the surface of a sheet in advance such that the surface of the sheet has a surface roughness (Rz) larger than the desired surface roughness (Rz), wherein the sheet is among a plurality of sheets for forming a thermoplastic resin sheet and serves as one or both surfaces 10A of the composite interlayer film 10. An irregularity is preferably imparted to the surface of the sheet by a known method, and for example, an irregularity may be imparted thereto by embossing. When the sheet is formed by extrusion, an extrusion condition is preferably appropriately adjusted to impart an irregularity.

In general, heating and pressurization during thermocompression bonding make the irregularity imparted in advance to the sheet smaller and also reduce the surface roughness (Rz). However, by imparting a large irregularity to each sheet in advance, the surface of the thermoplastic resin sheet can have the desired surface roughness (Rz) even if the irregularity is made smaller.

Another method may be a method involving imparting an irregularity to a release sheet used during thermocompression bonding, overlaying the release sheet on a sheet for forming a thermoplastic resin sheet such that the surface having the irregularity thereof is in contact with the sheet for forming a thermoplastic resin sheet, and transferring the irregularity of the release sheet to the surface of the thermoplastic resin sheet during thermocompression bonding. An irregularity is preferably imparted to the surface of the release sheet by a known method, and for example, an irregularity is preferably imparted thereto by embossing.

### <Method for using composite interlayer film>

The composite interlayer film of the present invention is used to manufacture a laminated panel. Specifically, the composite interlayer film is used in an application in which the composite interlayer film is sandwiched between two transparent panels and integrated therewith to manufacture a laminated panel. In the present invention, by manufacturing a laminated panel by using the above composite interlayer film, a laminated panel having good appearance in which foaming in the composite interlayer film is suppressed can be obtained.

The method for manufacturing a laminated panel is not particularly limited, and may be a general method for manufacturing laminated glass. For example, as shown in Fig. 5, the composite interlayer film 10 is preferably disposed between a pair of the transparent panels 20, 20, and they are preferably integrated by thermocompression bonding by pressurization and heating in an autoclave or the like. The heating temperature for thermocompression bonding is, for example, 60°C or more and 180°C or less, and preferably 80°C or more and 160°C or less. The pressure (gauge pressure) for thermocompression bonding is, for example, 1 MPa or more and 18 MPa or less, and preferably 3 MPa or more and 15 MPa or less.

### <Laminated panel>

The present invention also provides a laminated panel manufactured from the composite interlayer film described above. The laminated panel includes a composite interlayer film and two transparent panels, wherein the composite interlayer film is disposed in such a way as to be sandwiched between the two transparent panels. In the laminated panel, the two transparent panels are adhered and integrated via the composite interlayer film described above.

Examples of the transparent panel include a glass plate. The glass plate may be inorganic glass or organic glass, and is preferably inorganic glass. The inorganic glass is not particularly limited, and examples thereof include clear glass, clear float glass, float plate glass, tempered glass, colored glass, polished plate glass, figured glass, wired plate glass, lined plate glass, ultraviolet absorbing plate glass, infrared reflecting plate glass, infrared absorbing plate glass, and green glass.

As the organic glass, what is generally referred to as resin glass is used, and the organic glass is not particularly limited. Examples thereof include organic glass composed of a polycarbonate plate, a polymethyl methacrylate plate, and a polyester plate.

The two transparent panels may be composed of the same material, or of different materials. For example, one may be inorganic glass and the other may be organic glass. Both of the two transparent panels are preferably inorganic glass or organic glass, and the both are more preferably inorganic glass.

The thickness of each of the transparent panels is not particularly limited, and is preferably 0.5 mm or more and 3.2 mm or less, more preferably 0.7 mm or more and 2.7 mm or less, and further preferably 1.0 mm or more and 2.6 mm or less. When the thickness is within the above range, it is possible to set the thickness of the entire laminated panel to a certain level or less while imparting a certain level of mechanical strength to the laminated panel.

The composite interlayer film and the laminated panel according to the present invention can be used for various vehicles such as an automobile, window glass for a vehicle such as an aircraft or a ship, and window glass for a building or the like, and are preferably used for a building and for an automobile.

The interlayer film structure and the laminated panel according to the present invention are preferably used particularly for an automobile. When these are used for an automobile, these may be used for any window glass such as a windshield, side glass, rear glass, or roof glass.

The laminated panel is generally held by fitting a peripheral portion thereof into a holding portion provided around the laminated panel, and a sheet-shaped object may be disposed in such a peripheral portion. The peripheral portion is held by the holding portion and is thus covered with the holding portion and invisible from the outside. Thus, when a sheet-shaped object is provided in the peripheral portion, it is possible to prevent the sheet-shaped object from blocking the view or degrading the design.

The laminated panel may be provided with a shielding portion that shields a part of the laminated panel. The shielding portion is not particularly limited, and is preferably provided on either one of the transparent panels. The shielding portion may be provided on any surface of the transparent panel, and is preferably provided on the surface on the composite interlayer film side.

When a shielding portion is provided on one of the pair of transparent panels in the laminated panel as window glass, the shielding portion is preferably provided on the transparent panel on the outdoor side (outside the vehicle in an automobile) of the pair of transparent panels. The shielding portion is not particularly limited as long as the shielding portion has a light shielding property, and the shielding portion is preferably colored with a coloring agent such as a pigment or a dye, and more preferably a black shielding portion that is colored black. The shielding portion is preferably formed on the transparent panel by printing or others. The shielding portion is preferably a black printed portion, also referred to as a black ceramic portion. The black ceramic portion is generally formed from black ceramic. The shielding portion is generally provided in the peripheral portion of the transparent panel in order to prevent blocking of the view.

When a shielding portion is provided, the sheet-shaped object described above is preferably disposed at a position at which the sheet-shaped object is superposed on the shielding portion when the laminated panel is viewed in the thickness direction. This can prevent the sheet-shaped object from blocking the view or degrading the design.

### Examples

The present invention will be described in even more detail with reference to Examples, but the present invention is not limited in any way by these Examples.

### <Evaluation>

The laminated panel obtained in each of Examples and Comparative Examples was evaluated according to the following evaluation criteria.

1. Appearance (air at end portion)

The end portion of the composite interlayer film was visually observed and evaluated according to the following criteria.
A: There were no air bubbles at the end portion.
B: Air bubbles were observed on a partial end portion side.
C: Air bubbles were observed over the almost entire perimeter of the end portion.

2. Appearance (air around sheet-shaped object)

The area around the sheet-shaped object provided in the composite interlayer film was visually observed and evaluated according to the following criteria.
A: There were no air bubbles around the sheet-shaped object.
B: There was one air bubble around the sheet-shaped object.
C: There were a plurality of air bubbles around the sheet-shaped object.

### 3. Workability in trim treatment

The workability in a trim treatment was evaluated according to the following evaluation criteria.
A: In the laminated panel, the thermoplastic resin did not protrude, and almost no trim treatment was required.
B: In the laminated panel, misalignment occurred between the thermoplastic resin sheet and the transparent panel, and the thermoplastic resin protruded. Depending on the thickness of the composite interlayer film, a trim treatment of the peripheral edge portion was possible, but was complicated because of the presence of an electrode wire.
C: In the laminated panel, misalignment occurred between the thermoplastic resin sheet and the transparent panel, and the thermoplastic resin protruded. A large amount of the thermoplastic resin protruded, making it difficult to carry out trimming, and the trim treatment was extremely complicated because of the presence of an electrode wire.

### 4. Air bubbles inside film (membrane/transparent panel interface)

The interface between the composite interlayer film and the transparent panel was observed and evaluated according to the following evaluation criteria.
A: There were no air bubbles at the interface between the composite interlayer film and the transparent panel.
B: There were air bubbles at the interface between the composite interlayer film and the transparent panel.

The method for measuring each physical property in the Examples and the Comparative Examples was as follows.

### (Compression ratio)

The compression ratio is a compression ratio when held at 90°C and a pressure of 0.08 MPa for 5 minutes, and was measured by the method described herein.

### (Surface roughness (Rz))

The surface roughness (Rz) was determined by measuring the ten-point average roughness measured according to JIS B0601:1994.

### (Thermoplastic resin sheets)

PVB: A resin sheet made of a polyvinyl butyral-based resin, containing a plasticizer, plasticizer content: 40 parts by mass (per 100 parts by mass of the polyvinyl butyral-based resin), a compression ratio of 4.8%, a PVB sheet, a surface roughness (Rz) of 40 µm

EVA: A resin sheet made of an ethylene vinyl acetate copolymer (trade name: S-LEC EN Film, manufactured by Sekisui Chemical Co., Ltd.), a compression ratio of 76.5%, an EVA sheet

POE: A resin sheet made of a polyolefin-based thermoplastic elastomer (trade name: PHOTOCAP (registered trademark) 35521P HLT, manufactured by Specialized Technology Resources, Inc.), a compression ratio of 18.1%, a POE sheet

Ionomer: An ethylene and methacrylate ionic copolymer sheet containing a metal ion (trade name: SentryGlas Plus, manufactured by DuPont.), a compression ratio of 12.0%, an ionomer sheet

### (Sheet-shaped objects)

TCL: A film obtained by screen-printing a conductive paste made of a silver nanowire on a PET film having a thickness of 125 µm (TCL film)

PDLC: A polymer dispersed liquid crystal (PDLC) film, trade name: LCG-Smart film, manufactured by Gauzy Ltd.

NFC: A flexible printed board obtained by printing an antenna and wiring on a PET film having a thickness of 125 µm by using a metal paste by screen-printing, and further, mounting various electronic elements by using a surface mounter (NFC board). Size: 40 mm × 40 mm.

Touch: A flexible printed board obtained by printing wiring on a PET film having a thickness of 125 µm by using a metal paste by screen-printing, and further, mounting various electronic elements by using a surface mounter (touch sensor board). Size: 25 mm × 100 mm.

### (Transparent panel)

A clear glass plate having a thickness of 2.1 mm

### [Example 1]

### (Production of composite interlayer film)

Four PVB sheets having a thickness of 380 µm were provided. The PVB sheets were pre-cut to match the shape of the side glass (area of 0.45 m²). The TCL film used was 10 mm smaller than the PVB sheets over the entire perimeter.

As shown in Table 1, one PVB sheet, another PVB sheet, the TCL film, still another PVB sheet, and the other PVB sheet were laminated in presented order to obtain a laminated body. At this time, the position of the TCL film was adjusted such that the peripheral edge portion of the TCL film was disposed 10 mm inside the peripheral edge portion of each PVB sheet over the entire perimeter. In addition, an electrode wire (flexible flat cable) connected to the TCL film was disposed at the same position between the PVB sheets as that of the TCL film.

Release sheets were overlaid on both sides of the obtained laminated body, and the resultant was heated and depressurized by vacuum forming under conditions of a temperature of 70°C and a gauge pressure of -780 mbar to integrate the four PVB sheets by thermocompression bonding into a single thermoplastic resin sheet, to obtain a composite interlayer film having the TCL film embedded therein. The obtained composite interlayer film had the configuration shown in Fig. 2.

EPDM rubber sheets were used as the release sheets used in the thermocompression bonding, and the surface of the EPDM rubber sheet on the laminated body side was embossed such that the surface roughness (Rz) of the composite interlayer film was 40 µm.

### (Production of laminated panel)

On a transparent panel, the composite interlayer film and another transparent panel were overlaid, and these were integrated by using an autoclave under conditions of 140°C and 15 MPa (gauge pressure) to obtain a laminated panel. The obtained laminated panel was evaluated based on the above evaluation criteria.

### [Examples 2 and 3]

The procedure was carried out in the same manner as in Example 1, except that the sheets for forming a thermoplastic resin sheet were changed as shown in Table 1.

### [Example 4]

Two ionomer sheets having a thickness of 900 µm were provided. As shown in Table 1, one ionomer sheet, the TCL film, and the other ionomer sheet were laminated in presented order to obtain a laminated body. A composite interlayer film was obtained in the same manner as in Example 1 except for the above.

### [Example 5]

One PVB sheet having a thickness of 380 µm and two PVB sheets having a thickness of 760 µm were provided. As shown in Table 1, the PVB sheet (380 µm), the TCL film, one PVB sheet (760 µm), and the other PVB sheet (760 µm) were laminated in presented order to obtain a laminated body. A composite interlayer film was obtained in the same manner as in Example 1 except for the above.

### [Example 6]

The procedure was carried out in the same manner as in Example 5, except that a PDLC film was used instead of the TCL film as the sheet-shaped object. An electrode wire connected to the PDLC film was disposed at the same position between the PVB sheets as that of the PDLC film.

### [Example 7]

A PDLC film and a touch sensor board were provided as the sheet-shaped objects. Three PVB sheets having a thickness of 760 µm were provided, and as shown in Table 1, one PVB sheet, the PDLC film, the touch sensor board, another PVB sheet, and the other PVB sheet were laminated in presented order to obtain a laminated body. A composite interlayer film was obtained in the same manner as in Example 6 except for the above. The obtained composite interlayer film had the same configuration as that shown in Fig. 3 except for the number of sheets.

### [Example 8]

A TCL film and a touch sensor board were provided as the sheet-shaped objects, and the procedure was carried out in the same manner as in Example 7, except that the TCL film was used instead of the PDLC film. An electrode wire connected to the TCL film was disposed at the same position between the PVB sheets as that of the TCL film.

### [Example 9]

A TCL film and an NFC board were provided as the sheet-shaped objects, and the procedure was carried out in the same manner as in Example 8, except that the NFC board was used instead of the touch sensor board.

### [Example 10]

The procedure was carried out in the same manner as in Example 9, except that as the release films, ones of which the surface on the laminated body side was embossed such that the surface roughness (Rz) of the composite interlayer film was 10 µm were used.

### [Example 11]

The procedure was carried out in the same manner as in Example 9, except that as the release films, ones of which the surface on the laminated body side was embossed such that the surface roughness (Rz) of the composite interlayer film was 100 µm were used.

### [Example 12]

The procedure was carried out in the same manner as in Example 9, except that as the release films, ones of which the surface on the laminated body side was embossed such that the surface roughness (Rz) of the composite interlayer film was 120 µm were used.

### [Example 13]

The procedure was carried out in the same manner as in Example 9, except that as the release films, ones without embossing were used.

### [Comparative Example 1]

### (Production of laminated panel)

Four PVB sheets having a thickness of 380 µm were provided. The PVB sheets were pre-cut into the shape of the side glass. The TCL film used had the same outline as that of the PVB sheets.

One PVB sheet, another PVB sheet, the TCL film, still another PVB sheet, and the other PVB sheet were laminated in presented order on one transparent panel, and the other transparent panel was further overlaid thereon to obtain a laminated body. At this time, the peripheral edge portion of the TCL film was disposed at a position matching the peripheral edge portion of each PVB sheet over the entire perimeter. In addition, an electrode wire connected to the TCL film was disposed at the same position between the PVB sheets as that of the TCL film.

The obtained laminated body was subjected to preliminary compression bonding by vacuum forming under conditions of a temperature of 70°C and a gauge pressure of -780 mbar, and then subjected to main compression bonding by using an autoclave under conditions of 140°C and 15 MPa (gauge pressure) to integrate each constituent material by thermocompression bonding to obtain a laminated panel.

### [Comparative Example 2]

The procedure was carried out in the same manner as in Comparative Example 1, except that the TCL film used was 5 mm smaller than the PVB sheet over the entire perimeter, and that in the laminated body, the position of the peripheral edge portion of the TCL film was adjusted so as to be disposed 5 mm inside the peripheral edge portion of each PVB sheet over the entire perimeter.

### [Comparative Example 3]

The procedure was carried out in the same manner as in Comparative Example 1, except that the TCL film used was 5 mm smaller than the PVB sheet over the entire perimeter, and that in the laminated body, the position of the peripheral edge portion of the TCL film was adjusted so as to be disposed 10 mm inside the peripheral edge portion of each PVB sheet over the entire perimeter.

### [Comparative Example 4]

One PVB sheet having a thickness of 380 µm and two PVB sheets having a thickness of 760 µm were provided. As shown in Table 2, the PVB sheet (380 µm), the TCL film, one PVB sheet (760 µm), and the other PVB sheet (760 µm) were laminated in presented order on one transparent panel, and the other transparent panel was further overlaid thereon to obtain a laminated body. A laminated panel was obtained in the same manner as in Comparative Example 1 except for the above.

### [Comparative Example 5]

The procedure was carried out in the same manner as in Comparative Example 4, except that a PDLC film was used instead of the TCL film as the sheet-shaped object. An electrode wire connected to the PDLC film was disposed at the same position between the PVB sheets as that of the PDLC film.

### [Comparative Example 6]

A PDLC film and a touch sensor board were provided as the sheet-shaped objects. In addition, three PVB sheets having a thickness of 760 µm were provided, and as shown in Table 2, one PVB sheet, the PDLC film, the touch sensor board, another PVB sheet, and the other PVB sheet were laminated in presented order on one transparent panel, and the other transparent panel was further overlaid thereon to obtain a laminated body. A laminated panel was obtained in the same manner as in Comparative Example 5 except for the above.

### [Comparative Example 7]

A TCL film and a touch sensor board were provided as the sheet-shaped objects, and the procedure was carried out in the same manner as in Comparative Example 6, except that the TCL film was used instead of the PDLC film. An electrode wire connected to the TCL film was disposed at the same position between the PVB sheets as that of the TCL film.

### [Comparative Example 8]

A TCL film and an NFC board were provided as the sheet-shaped objects, and the procedure was carried out in the same manner as in Comparative Example 7, except that the NFC board was used instead of the touch sensor board.

**[Table 1]**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Constituent materials | Sheet 1 | PVB | EVA | POE | Ionomer | PVB | PVB | PVB | PVB | PVB | PVB |
| | Sheet 2 | PVB | EVA | POE | - | - | - | - | - | - | - |
| | Sheet-shaped object 1 | TCL | TCL | TCL | TCL | TCL | PDLC | PDLC | TCL | TCL | TCL |
| | Sheet-shaped object 2 | - | - | - | - | - | - | Touch | Touch | NFC | NFC |
| | Sheet 3 | PVB | EVA | POE | - | PVB | PVB | PVB | PVB | PVB | PVB |
| | Sheet 4 | PVB | EVA | POE | Ionomer | PVB | PVB | PVB | PVB | PVB | PVB |
| Composite formation carried out in advance | | Yes | Yes | Yes | Yes | Yes | Yes | Yes | Yes | Yes | Yes |
| Distance L (mm) | | 10 | 10 | 10 | 10 | 10 | 10 | 10 | 10 | 10 | 10 |
| Material thickness (µm) | Sheet 1 | 380 | 380 | 380 | 900 | 380 | 380 | 760 | 760 | 760 | 760 |
| | Sheet 2 | 380 | 380 | 380 | - | - | - | - | - | - | - |
| | Sheet-shaped object 1 | 125 | 125 | 125 | 125 | 125 | 385 | 385 | 125 | 125 | 125 |
| | Sheet-shaped object 2 | - | - | - | - | - | - | 625 | 625 | 1335 | 1335 |
| | Sheet 3 | 380 | 380 | 380 | - | 760 | 760 | 760 | 760 | 760 | 760 |
| | Sheet 4 | 380 | 380 | 380 | 900 | 760 | 760 | 760 | 760 | 760 | 760 |
| Total thickness (µm) | Total thickness after lamination | 1645 | 1645 | 1645 | 1925 | 2025 | 2285 | 3290 | 3030 | 3740 | 3740 |
| | Total thickness after integration | 1645 | 1645 | 1645 | 1925 | 2025 | 2285 | 2665 | 2405 | 2405 | 2405 |
| Maximum thickness of sheet-shaped object (µm) | | 125 | 125 | 125 | 125 | 125 | 385 | 625 | 625 | 1335 | 1335 |
| Surface roughness after integration (µm) | | 40 | 100 | 15 | 40 | 40 | 40 | 40 | 40 | 40 | 10 |
| Evaluation | Appearance (air at end portion) | A | A | A | A | A | A | A | A | A | A |
| | Appearance (air around sheet-shaped object) | A | A | A | A | A | A | A | A | A | A |
| | Workability in trim treatment | A | A | A | A | A | A | A | A | A | A |
| | Air bubbles inside film (membrane/transparent panel interface) | A | A | A | A | A | A | A | A | A | A |

**[Table 2]**

| | | Example 11 | Example 12 | Example 13 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|
| Constituent materials | Sheet 1 | PVB | PVB | PVB | PVB | PVB | PVB | PVB | PVB | PVB | PVB | PVB |
| | Sheet 2 | - | - | - | PVB | PVB | PVB | - | - | - | - | - |
| | Sheet-shaped object 1 | TCL | TCL | TCL | TCL | TCL | TCL | TCL | PDLC | PDLC | TCL | TCL |
| | Sheet-shaped object 2 | NFC | NFC | NFC | - | - | - | - | - | Touch | Touch | NFC |
| | Sheet 3 | PVB | PVB | PVB | PVB | PVB | PVB | PVB | PVB | PVB | PVB | PVB |
| | Sheet 4 | PVB | PVB | PVB | PVB | PVB | PVB | PVB | PVB | PVB | PVB | PVB |
| Composite formation carried out in advance | | Yes | Yes | Yes | No | No | No | No | No | No | No | No |
| Distance L (mm) | | 10 | 10 | 10 | 0 | 5 | 10 | 10 | 10 | 10 | 10 | 10 |
| Material thickness (µm) | Sheet 1 | 760 | 760 | 760 | 380 | 380 | 380 | 380 | 380 | 760 | 760 | 760 |
| | Sheet 2 | - | - | - | 380 | 380 | 380 | - | - | - | - | - |
| | Sheet-shaped object 1 | 125 | 125 | 125 | 125 | 125 | 125 | 125 | 385 | 385 | 125 | 125 |
| | Sheet-shaped object 2 | 1335 | 1335 | 1335 | - | - | - | - | - | 625 | 625 | 1335 |
| | Sheet 3 | 760 | 760 | 760 | 380 | 380 | 380 | 760 | 760 | 760 | 760 | 760 |
| | Sheet 4 | 760 | 760 | 760 | 380 | 380 | 380 | 760 | 760 | 760 | 760 | 760 |
| Total thickness (µm) | Total thickness after lamination | 3740 | 3740 | 3740 | 1645 | 1645 | 1645 | 2025 | 2285 | 3290 | 3030 | 3740 |
| | Total thickness after integration | 2405 | 2405 | 2405 | - | - | - | - | - | - | - | - |
| Maximum thickness of sheet-shaped object (µm) | | 1335 | 1335 | 1335 | 125 | 125 | 125 | 125 | 385 | 625 | 625 | 1335 |
| Surface roughness after integration (µm) | | 100 | 120 | 5 | 40 | 40 | 40 | 40 | 40 | 40 | 40 | 40 |
| Evaluation | Appearance (air at end portion) | A | A | A | C | C | B | C | C | C | C | C |
| | Appearance (air around sheet-shaped object) | A | A | A | C | C | B | A | C | C | C | C |
| | Workability in trim treatment | A | A | A | B | A | A | B | B | C | C | C |
| | Air bubbles inside film (membrane/transparent panel interface) | A | B | B | A | A | A | A | A | A | A | A |

* The constituent materials in Tables 1 and 2 indicate that the laminated body was obtained by laminating these in order from the top.
* The distance L in Tables 1 and 2 indicates the shortest distance between the peripheral edge portion of the sheet-shaped object and the peripheral edge portion of the thermoplastic resin sheet in the composite interlayer film.
* The total thickness after lamination indicates the thickness of the laminated body before thermocompression bonding, and the total thickness after integration indicates the thickness of the composite interlayer film.

In each Example, the sheet-shaped object was made smaller than the thermoplastic resin sheet and disposed on the inner peripheral side of the thermoplastic resin sheet, whereby the sheet-shaped object was able to be embedded in the thermoplastic resin sheet in the composite interlayer film. In addition, the composite interlayer film having the sheet-shaped object embedded in the thermoplastic resin sheet was sandwiched between a pair of transparent panels and integrated therewith to obtain a laminated panel, whereby air bubbles were prevented from being generated at the end portion of the composite interlayer film or around the sheet-shaped object, making it possible to obtain a laminated panel having good appearance. In addition, the protrusion of the thermoplastic resin was prevented, and the workability in the trim treatment was improved.

In contrast, in each Comparative Example, the sheet-shaped object and the thermoplastic resin sheet were not integrated in advance, and the sheet-shaped object and the thermoplastic resin sheet were integrated together with the transparent panels when producing a laminated panel. Because of this, in each Comparative Example, air bubbles were generated at the end portion of the composite interlayer film or around the sheet-shaped object, making it impossible to obtain a laminated panel having good appearance. In addition, when the distance L between the peripheral edge portion of the sheet-shaped object and the peripheral edge portion of the thermoplastic resin sheet was reduced as shown in Comparative Examples 1 and 2, or when a flexible printed board having a relatively large thickness was used as shown in Comparative Examples 6 to 8, the thermoplastic resin protruded, and the workability in the trim treatment also deteriorated.

### Reference Signs List

10 Composite interlayer film for laminated panel
10A Surface
11 Thermoplastic resin sheet
12 Sheet-shaped object
13, 14, 13A, 13B, 14A, 14B Sheet
11S, 12S, 13S, 14S Peripheral edge portion
20 Transparent panel
L Distance

## Claims

1. A composite interlayer film for a laminated panel, for use in an application in which the composite interlayer film is sandwiched between a pair of transparent panels and integrated therewith to manufacture the laminated panel, the composite interlayer film comprising a thermoplastic resin sheet and a sheet-shaped object that is embedded in the thermoplastic resin sheet and is electrically controllable.

2. The composite interlayer film for a laminated panel according to claim 1, wherein a compression ratio of the thermoplastic resin sheet when held at 90°C and 0.08 MPa for 5 minutes is a 3% or more and 90% or less.

3. The composite interlayer film for a laminated panel according to claim 1 or 2, wherein a peripheral edge portion of the sheet-shaped object is disposed 8 mm or more inside a peripheral edge portion of the thermoplastic resin sheet.

4. The composite interlayer film for a laminated panel according to any one of claims 1 to 3, wherein the composite interlayer film has a thickness of 1000 µm or more and 2500 µm or less.

5. The composite interlayer film for a laminated panel according to any one of claims 1 to 4, wherein the sheet-shaped object comprises a portion having a thickness of 100 µm or more.

6. The composite interlayer film for a laminated panel according to any one of claims 1 to 5, wherein the composite interlayer film has a surface roughness (Rz) of 1 µm or more and 120 µm or less.

7. The composite interlayer film for a laminated panel according to any one of claims 1 to 6, wherein the composite interlayer film for a laminated panel has an outline shape conforming to a shape of the transparent panel.

8. A method for manufacturing the composite interlayer film for a laminated panel according to any one of claims 1 to 7, the method comprising disposing the sheet-shaped object between sheets for forming the thermoplastic resin sheet, and embedding the sheet-shaped object inside the thermoplastic resin sheet.

9. The method for manufacturing the composite interlayer film for a laminated panel according to claim 8, wherein the sheets for forming the thermoplastic resin sheet are processed into an outline shape conforming to a shape of the transparent panel.

10. The method for manufacturing the composite interlayer film for a laminated panel according to claim 8 or 9, wherein after the sheet-shaped object is disposed between the sheets for forming the thermoplastic resin sheet, thermocompression bonding is carried out.

11. The method for manufacturing the composite interlayer film for a laminated panel according to claim 10, wherein a surface roughness (Rz) of the composite interlayer film is adjusted to 1 µm or more and 120 µm or less during the thermocompression bonding.

12. A laminated panel comprising the composite interlayer film according to any one of claims 1 to 7 and a pair of transparent panels, wherein the composite interlayer film is disposed between the pair of transparent panels, and the pair of transparent panels are integrated via the composite interlayer film.

13. A method for manufacturing a laminated panel, comprising disposing the composite interlayer film according to any one of claims 1 to 7 between a pair of transparent panels, and integrating the pair of transparent panels via the composite interlayer film.
